Europäisches Patentamt

European Patent Office

Office européen des brevets

(11) Veröffentlichungsnummer: **0 492 070 B1**

# EUROPÄISCHE PATENTSCHRIFT

(45) Veröffentlichungstag der Patentschrift: 27.12.95

(51) Int. Cl.⁶: **B60L 11/18**, H02P 7/298

(21) Anmeldenummer: **91117023.1**

(22) Anmeldetag: **07.10.91**

(54) **Fahrantrieb für Flurförderfahrzeuge**

(30) Priorität: **28.12.90 DE 4042041**

(43) Veröffentlichungstag der Anmeldung:
**01.07.92 Patentblatt 92/27**

(45) Bekanntmachung des Hinweises auf die
Patenterteilung:
**27.12.95 Patentblatt 95/52**

(84) Benannte Vertragsstaaten:
**DE FR GB IT SE**

(56) Entgegenhaltungen:
DE-A- 1 513 648
US-A- 4 387 325
US-A- 4 924 395

**PATENT ABSTRACTS OF JAPAN vol. 4, no.
161 (M-40)(643) 11. November 1980 & JP-A-
55 111 351**

(73) Patentinhaber: **JUNGHEINRICH AG**
**Lawaetzstrasse 9-13**
**D-22844 Norderstedt (DE)**

(72) Erfinder: **Schuckert, Wolfgang, Dipl.-Ing.**
**Stratenberg 31 a**
**W-2000 Hamburg 65 (DE)**
Erfinder: **Oestmann, Harald, Dipl.-Ing.**
**Wohldorfer Damm 47**
**W-2000 Hamburg 65 (DE)**

(74) Vertreter: **Dipl.-Ing. H. Hauck, Dipl.-Ing. E.
Graalfs, Dipl.-Ing. W. Wehnert, Dr.-Ing. W. Döring**
**Postfach 30 24 30**
**D-20308 Hamburg (DE)**

## Beschreibung

Die Erfindung bezieht sich auf einen Fahrantrieb für Flurförderfahrzeuge nach dem Oberbegriff des Patentanspruchs 1.

Flurförderfahrzeuge mit elektrischem Antrieb verwenden normalerweise Reihenschlußmotoren wegen ihres hohen Anfahrmoments. Reihenschluß motoren haben indessen die Eigenschaft, daß ihre Drehzahl stark von der Belastung abhängig ist. Wird zum Beispiel eine Endgeschwindigkeit ohne Last von 8 km/h erhalten, stellt sich mit Last eine Endgeschwindigkeit von 5 km/h ein. Motorgetriebene Deichselfahrzeuge, bei denen der Fahrer mit dem Fahrzeug mitläuft und es über eine Deichsel kontrolliert, müssen naturgemäß eine Maximalgeschwindigkeit von zum Beispiel 6 km/h einhalten.

Eine Drehzahlbegrenzung ist auch aus Sicherheitsgründen erforderlich. Bei Verwendung eines Reihenschlußmotors läßt sich ohne weitere Maßnahmen eine Drehzahlbegrenzung zumindest dann nicht erreichen, wenn der Motor von der Leistung her so ausgelegt ist, daß er auch bei Teil- oder Vollast wenigstens in der Ebene die Endgeschwindigkeit erreichen soll.

Ein Fahrantrieb der eingangs genannten Art ist aus DE-A-1 513 648 bekanntgeworden. Ein Gleichstromreihenschlußmotor wird über elektronische Leistungsschalter an eine Stromquelle angeschlossen und erhält ein Stellsignal von einer vorzugsweise fußbetätigten Stellvorrichtung. Eine Begrenzungsvorrichtung begrenzt den Motorstrom automatisch, wenn das Fahrzeug mit mittlerer oder hoher Geschwindigkeit fährt.

Aus US-A-4 924 395 ist ein Fahrantrieb für Elektrolokomotiven bekannt, welcher mit Hilfe von Meßvorrichtungen Strom und Spannung des von einem Dieselmotor angetriebenen Generators für mehrere Elektromotoren erfassen. Aufgrund der Motorstromwerte wird auf eine bestimmte aktuelle Drehzahl geschlossen. Die Ist-Drehzahl wird mit einer Soll-Drehzahl verglichen zwecks Ermittlung eines Schlupfes des angetriebenen Fahrzeuges. Bei zu großer Differenz von Soll- und Ist-Wert wird die Felderregung des Generators reduziert. Die Drehzahlbegrenzung erfolgt bei einem maximalen Drehmoment der Motoren.

Der Erfindung liegt die Aufgabe zugrunde, ein Fahrantrieb für Flurförderfahrzeuge mit einem Gleichstromreihenschlußmotor zu schaffen, bei dem unabhängig von der Last mit einem Mindestaufwand an Schaltungsmitteln eine automatische Drehzahlbegrenzung erhalten wird, wenn die Grenzdrehzahl erreicht wird.

Diese Aufgabe wird durch die Merkmale des Patentanspruchs 1 gelöst.

Bei dem erfindungsgemäßen Fahrantrieb wird der in seinen Antriebseigenschaften und im Aufwand günstige Reihenschlußmotor verwendet. Eine erste Meßvorrichtung mißt die Ankerspannung und eine zweite den Motorstrom. In einer Vergleichsstufe wird der Quotient aus dem jeweiligen Ankerspannungswert und dem Stromwert mit einem Referenzwert verglichen. Eine Begrenzungsstufe erzeugt ein Begrenzungssignal, wenn der Quotient eine vorgegebene Beziehung zum Referenzwert erreicht. Ist dies der Fall, wird das Stellsignal nach Maßgabe des Bregrenzungssignals modifiziert. Das Stellsignal, das zum Beispiel von einer handbetätigten Stellvorrichtung erzeugt wird, steuert zum Beispiel einen elektronischen Schalter (Leistungstransistor, Thyristor oder dergleichen) dergestalt, daß die Pulsbreiten entsprechend der Leistungsanforderung eingestellt werden. Wird nun festgestellt, daß das Verhältnis von Ankerspannung zu Motorstrom einen bestimmten Wert erreicht, wird beim erfindungsgemäßen Fahrantrieb das Stellsignal verändert, zum Beispiel reduziert, bis zum Beispiel der Quotient unterhalb des Referenzwertes liegt, was bedeutet, daß die Drehzahl einen Grenzwert nicht überschreitet.

Bei der Erfindung wird die Tatsache ausgenutzt, daß in der Maschinengleichung

$$U_A = I_A R_A + U_i$$

die gemessene Ankerspannung $U_A$ einen drehzahlproportionalen Anteil enthält, nämlich die induzierte Gegen-EMK

$$U_i = C_1 \phi_1 . n.$$

Der Quotient aus Ankerspannung und Motorstrom ist mithin ein Indikator für die Drehzahl.

Der Referenzwert ist nach den Gegebenheiten des Fahrantriebs und des Fahrzeugs zu ermitteln. So kann der Referenzwert aus dem Quotienten von Ankerspannung und Motorstrom gebildet werden, der unter Last und bei zulässiger Motordrehzahl gebildet ist. So kann der Referenzquotient zum Beispiel bei der Geschwindigkeit von 6 km/h und bei Vollast ermittelt und gebildet werden.

Ankerspannung und Motorstrom können als Augenblickswerte gemessen und verarbeitet werden. In diesem Fall ist es zweckmäßig, wenn die Messung jeweils kurz vor dem Ausschaltzeitpunkt des elektronischen Leistungsschalters erfolgt. Der Grund liegt darin, daß Strom und Spannung am Ende eines Schaltimpulses am größten sind. Alternativ können zur Ermittlung des Quotienten aus den Meßwerten von Ankerspannung und Motorstrom Mittelwerte gebildet werden.

Die Modifizierung des Stellsignals erfolgt zum Beispiel inkremental, indem das Stellsignal um konstante Inkremente verändert wird. Alternativ können die Inkremente aus der Differenz von Ist- und Referenzquotient gebildet werden. Damit keine Spannungsreduzierung zu Zeitpunkten erfolgt, in denen sie gar nicht erwünscht ist, ist es nach einer weiteren Ausgestaltung der Erfindung vorteilhaft, wenn das Begrenzungssignal nur erzeugt wird, wenn das Stellsignal eine vorgegebene Größe erreicht und/oder der Motorstrom kleiner ist als ein vorgegebener Wert (Sättigungswert) und/oder das Stellsignal kleiner ist als ein vorgegebener Höchstwert.

Bei dem erfindungsgemäßen Fahrantrieb kann in vorteilhafter Weise ein Reihenschlußmotor verwendet werden, ohne daß zusätzliche Sensoren zur Drehzahlerfassung erforderlich sind. Die Steuerung des Fahrzeugs kann unmittelbar über die Anschlußklemmen erfolgen, d.h. ein Eingriff in den Aufbau der Motorsteuerung ist nicht erforderlich. Der Aufwand für den erfindungsgemäßen Fahrantrieb ist daher minimal.

Die Erfindung wird nachfolgend anhand von Zeichnungen näher erläutert.

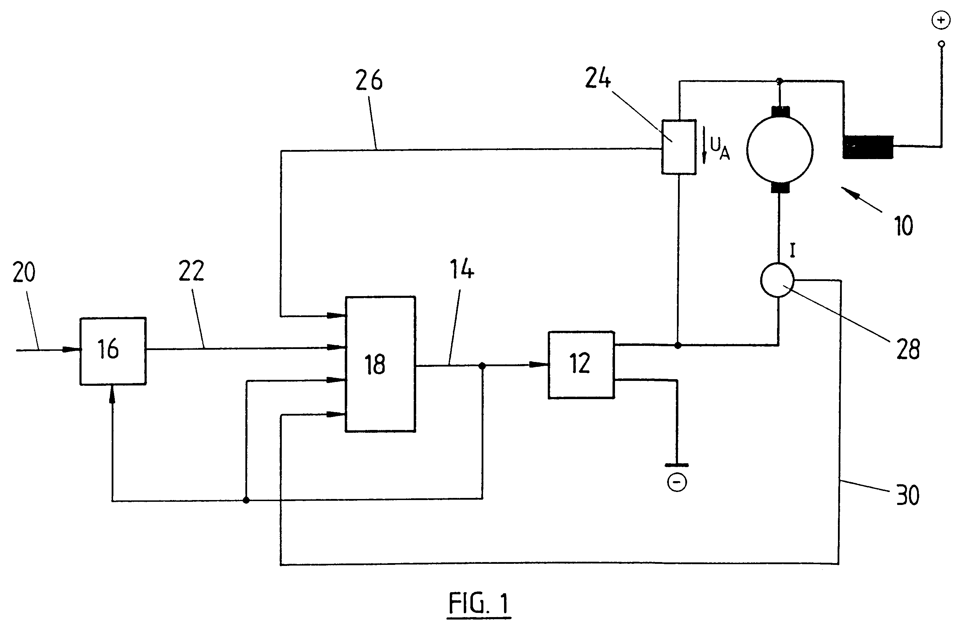

Fig. 1     zeigt ein Blockschaltbild eines Fahrantriebs nach der Erfindung.

Fig. 2     zeigt ein Blockschaltbild der Drehzahlbegrenzung der Schaltungsanordnung nach Fig. 1.

Fig. 3     zeigt die Drehzahlkennlinie des Gleichstrommotors nach Fig. 1.

Fig. 4     zeigt ein Diagramm der Spannungsimpulse für die Motorspannung.

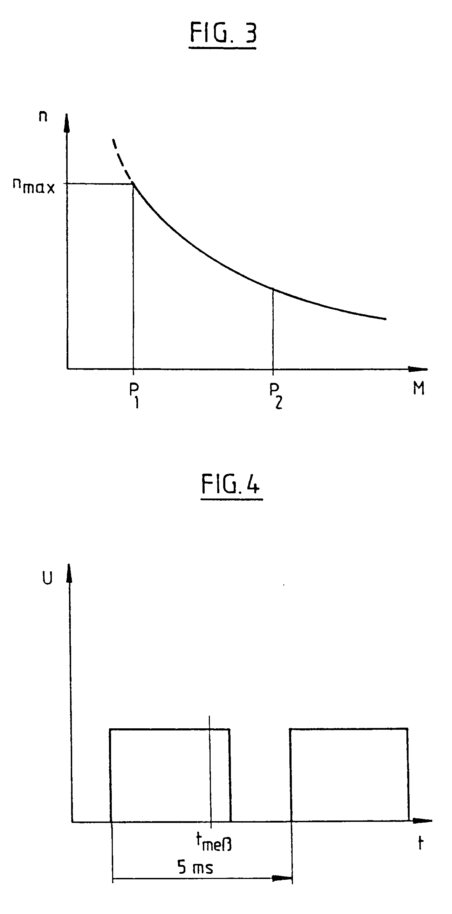

Ein Gleichstromreihenschlußmotor 10 liegt über eine Treiberstufe 12 an den Klemmen zum Beispiel einer Batterie. Die Treiberstufe 12 enthält die Motorsteuerung, beispielsweise in Form eines elektronischen Schalters, über den pulsweise die Spannung an den Motor 10 angelegt wird (siehe Fig. 4). Die Spannung wird zum Beispiel durch eine Pulsbreiten-Modulation geregelt.Die Vorgabe der Spannung erfolgt über ein Stellsignal, das über die Leitung 14 auf die Treiberstufe 12 gegeben wird. Das Stellsignal wird über eine Hochlaufstufe 16 und eine Drehzahlbegrenzungsstufe 18 von zum Beispiel einem handbetätigten Geber vorgegeben, dessen Signal (Sollwert) über die Leitung 20 in die Hochlaufstufe 16 eingegeben wird. Die Hochlaufstufe 16 verzögert das Stellsignal, das über die Leitung 22 auf die Drehzahlbegrenzungsstufe 18 gelangt.

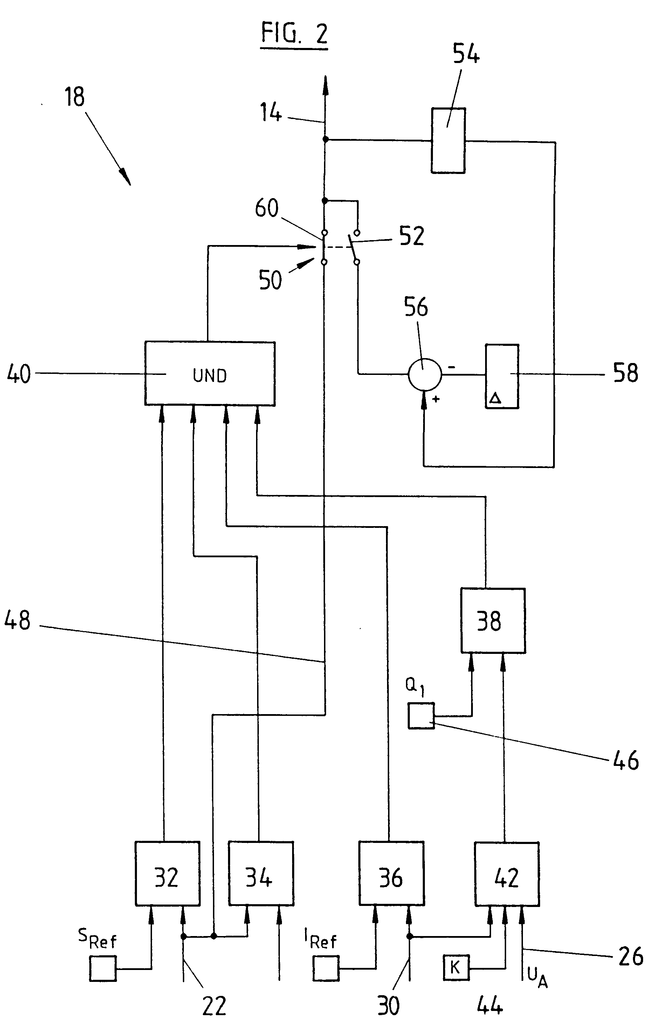

Eine erste Meßvorrichtung 24 mißt die Ankerspannung $U_A$ des Motors 10, und das Meßsignal gelangt über die Leitung 26 auf einen Eingang der Drehzahlbegrenzungsstufe 28. Eine zweite Meßvorrichtung 28 mißt den Motorstrom I, und das Ausgangssignal gelangt über eine Leitung 30 auf einen Eingang der Drehzahlbegrenzungsstufe. Der Aufbau der Drehzahlbegrenzungsstufe 18 geht näher aus Fig. 2 hervor.

Fig. 2 zeigt eine logische Schaltungsanordnung mit einem ersten Komparator 32, in dem ein Referenzstellsignal mit einem ersten Stellsignal verglichen wird. Ein zweiter Komparator 34 vergleicht ein Ist-Stellsignal mit einem Soll-Stellsignal. Ein dritter Komparator 36 vergleicht einen Referenzstrom mit dem gemessenen Motorstrom. Ein vierter Komparator 38 vergleicht einen Quotienten $Q_2$ mit einem Referenzquotienten $Q_1$. Die digitalen Ausgänge der Komparatoren 32 bis 38 werden auf ein Und-Glied 40 geschaltet.

In einer Quotientenbildungsstufe 42 wird der Quotient aus der Ankerspannung und dem Motorstrom gebildet und mit einem Faktor K multipliziert, der von der Stufe 44 auf einen Eingang der Quotientenbildungsstufe 42 gegeben wird. In den zweiten Eingang des vierten Komparators 38 wird ein Referenzquotient $Q_1$ von der Stufe 46 gegeben. Der Referenzquotient ist zum Beispiel ein Quotient aus Ankerspannung und Motorstrom in einem Arbeitspunkt $P_2$ (siehe Fig. 3), in dem die Drehzahl und damit die Geschwindigkeit einen Maximalwert hat, zum Beispiel 6 km/h unter Vollast. $P_1$ in Fig. 3 zeigt den Arbeitspunkt unter Vollast und einer Steigung der Fahrbahn, die beim Arbeitspunkt $P_2$ horizontal verläuft.

Das auf die Komparatoren 32 und 34 gegebene Stellsignal gelangt über eine Leitung 48 auch auf einen Schalter 50, der im Normalbetrieb geschlossen ist, so daß das Stellsignal von der Hochlaufstufe 16 unmittelbar auf den Treiber 12 gelangt. Sind im Und-Glied 40 indessen alle Bedingungen erfüllt, wird der Schalter umgelegt und der Kontakt 52 schließt, so daß nunmehr eine Modifizierung des Stellwerts stattfindet. Der jeweilige Stellwert S wird in einem Speicher 54 gespeichert und gelangt auf eine Summierstufe 56, deren Ausgangssignal auf die Leitung 14 gegeben wird. Eine Inkrementenstufe 58 gibt zum Beispiel ein konstantes negatives Inkrement auf die Summierstufe 56, so daß das Stellsignal S inkremental verringert wird bis die Und-Bedingungen am Und-Glied 40 nicht mehr erfüllt ist und Kontakt 52 öffnet und Kontakt 60 wieder schließt.

Der Komparator 32 erzeugt ein Ausgangssignal, wenn das Stellsignal von der Hochlaufstufe 16 größer ist als der Referenzstellwert. Der Referenzstellwert ist zum Beispiel 30% des gesamten Stellbereichs. Der Komparator 34 erzeugt ein Ausgangssignal, wenn das Stellsignal von der Hochlaufstufe 16 kleiner ist als der Sollwert. Der Komparator 36 erzeugt ein Ausgangssignal, wenn der Motorstrom kleiner ist als ein Referenzstrom. Der Referenzstrom entspricht dem Sättigungsstrom, wodurch sichergestellt ist, daß eine Drehzahlbegrenzung nur außerhalb des Sättigungsbereichs des Motors erfolgt. Der Komparator 38 schließlich erzeugt ein Ausgangssignal, wenn der Referenz-

quotient $Q_1$ kleiner ist als der Quotient $Q_2$. Durch die zusätzlichen Bedingungen aus den Komparatoren 32, 34, 36 wird sichergestellt, daß eine Spannungsreduzierung nicht erfolgt, wenn eine Drehzahlbegrenzung gar nicht erforderlich oder sogar schädlich wäre.

Statt eines konstanten Inkrements kann dieses auch aus der Differenz $Q_2$ - $Q_1$ abgeleitet werden.

Mit Hilfe der Meßvorrichtungen 24, 28 kann eine Augenblicksmessung vorgenommen werden, wobei Ankerspannung und Motorstrom nahezu zeitgleich gemessen werden, zum Beispiel innerhalb von 50 $\mu$s, und zwar im eingeschalteten Zustand des Leistungsschalters oder Treibers 12, vorzugsweise nahe am Ende eines Impulses, wie in Fig. 4 angedeutet. Der Zeitpunkt $t_{meß}$ liegt zum Beispiel 100 $\mu$s vor dem Ende des Impulses. Zum Vergleich: Eine Periode beträgt zum Beispiel 5 ms.

**Patentansprüche**

1. Fahrantrieb für Flurförderzeuge mit einem Gleichstromreihenschlußmotor (10), der an eine Stromquelle über einen elektronischen Leistungsschalter (12) angeschlossen ist, der ein Stellsignal von einer vorzugsweise handbetätigten Stellvorrichtung (20) erhält, einer Meßvorrichtung (28) für den Motorstrom (I) und einer Begrenzungsvorrichtung (18), die die Drehzahl des Gleichstrommotors automatisch begrenzt, wenn sie einen vorgegebenen Höchstwert erreicht, dadurch gekennzeichnet, daß eine weitere Meßvorrichtung (24) die Ankerspannung ($U_A$) mißt, in einer Vergleichsstufe (38) der Quotient ($Q_2$) aus dem Jeweiligen Ankerspannungswert ($U_A$) und dem Stromwert (I) mit einem vorgegebenen Verhältnis von Ankerspannung ($U_I$) und Motorstrom (I) Referenzwert ($Q_1$) verglichen wird, in einer Begrenzungsstufe (18) ein Begrenzungssignal erzeugt wird, wenn der Quotient ($Q_2$) den Referenzwert ($Q_1$) erreicht und das Stellsignal (S) nach Maßgabe des Begrenzungssignals modifiziert wird.

2. Fahrantrieb nach Anspruch 1, dadurch gekennzeichnet,daß der Referenzwert ($Q_1$) aus dem Quotienten von Ankerspannung und Motorstrom unter Last und bei zulässiger Motordrehzahl gebildet ist.

3. Fahrantrieb nach Anspruch 1 oder 2, dadurch gekennzeichnet, daß die Messung von Ankerspannung ($U_A$) und Motorstrom (I) kurz vor dem Ausschaltzeitpunkt des elektrischen Leistungsschalters (12) erfolgt.

4. Fahrantrieb nach Anspruch 1 oder 2, dadurch gekennzeichnet, daß aus den Meßwerten von Ankerspannung und Motorstrom Mittelwerte gebildet werden und der Quotient aus dem Mittelwert gebildet ist.

5. Fahrantrieb nach einem der Ansprüche 1 bis 4, dadurch gekennzeichnet, daß das Stellsignal (S) mit vorgegebenen Beträgen schrittweise verändert wird.

6. Fahrantrieb nach Anspruch 5, dadurch gekennzeichnet,daß konstante Beträge vorgegeben sind.

7. Fahrantrieb nach Anspruch 5, dadurch gekennzeichnet,daß die Beträge aus der Differenz von Ist-Quotient ($Q_2$) und Referenzquotient ($Q_1$) gebildet sind.

8. Fahrantrieb nach einem der Ansprüche 1 bis 7, dadurch gekennzeichnet, daß ein Begrenzungssignal nur erzeugt wird, wenn das Stellsignal eine vorgegebene Größe erreicht und/oder der Motorstrom kleiner ist als ein vorgegebener Wert und/oder das Stellsignal kleiner ist als ein vorgegebener Höchstwert.

**Claims**

1. A propelling device for industrial trucks comprising a d.c. series wound motor (10) which is connected to a source of energy through an electronic power switch (12) receiving a setting signal from a preferrably manually operated transmitting means (20), further comprising a measuring means (28) for measuring the motor current (I) and a limiting means (18) automatically limiting the speed of the D.C. motor when reaching a predetermined maximum level, characterized in that a further measuring means (24) is provided for measuring the armature voltage ($U_A$), that the ratio ($Q_2$) of the respective armature voltage level ($U_A$) to the current level (I) is compared in a comparator stage (38) with a predetermined ratio of the armature voltage ($U_A$) to a motor current (I) reference value ($Q_1$), that a limiting signal is generated in a limiting stage (18) when the ratio ($Q_2$) reaches the reference value ($Q_1$) and that the setting signal (S) is modified in response to the limiting signal.

2. The propelling device of claim 1, characterized in that the reference value ($Q_1$) of the ratio of armature voltage to motor current is determined under load and for a permissible motor speed.

3. The propelling device of claim 1 or 2, characterized in that the armature voltage ($U_A$) and motor current (I) is measured shortly before the time of turning off the electrical power switch (12).

4. The propelling device of claim 1 or 2, characterized in that mean values are calculated from the measurements of armature voltage and motor current and that the ratio is determined from the mean value.

5. The propelling device of one of claims 1 to 4, characterized in that the setting signal (S) is stepwise varied in predetermined amounts.

6. The propelling device of claim 5, characterized in that constant amounts are predetermined.

7. The propelling device of claim 5, characterized in that the amounts are determined from the difference between an actual value ratio ($Q_2$) and the reference ratio ($Q_1$).

8. The propelling device of one of claims 1 to 7, characterized in that a limiting signal is generated only then when the setting signal reaches a predetermined value and/or the motor current is below a predetermined value and/or the setting signal is below a predetermined maximum value.

**Revendications**

1. Dispositif d'entraînement pour véhicules de manutention au sol, comportant un moteur série à courant continu (10), raccordé à une source de courant par l'intermédiaire d'un sectionneur électronique d'alimentation (12) qui reçoit, un signal de commande provenant d'un dispositif (20) de commande, de préférence actionné à la main, un dispositif de mesure (28) pour l'intensité (I) du courant moteur, et un dispositif de limitation (18) qui limite automatiquement la vitesse de rotation du moteur à courant continu si cette vitesse de rotation atteint une valeur maximale prédéfinie, caractérisé en ce que
   - un autre dispositif de mesure (24) mesure la tension ($U_A$) du rotor,
   - dans un étage de comparaison (38), le quotient ($Q_2$) de chaque valeur ($U_A$) de la tension rotor par l'intensité (I) du courant moteur est comparé à une valeur de référence ($Q_1$) prédéfinie, quotient de la tension du rotor ($U_1$) par le courant (I) du moteur,
   - dans un étage (18) de limitation, est émis un signal de limitation si le quotient ($Q_2$) atteint la valeur de référence ($Q_1$), et le signal de commande (S) est modifié d'après l'indication fournie par le dispositif de limitation.

2. Dispositif d'entraînement suivant la revendication 1, caractérisé en ce que la valeur de référence ($Q_1$) est formée à partir du quotient de la tension du rotor et de l'intensité moteur, sous charge et pour une vitesse de rotation admissible pour le moteur.

3. Dispositif d'entraînement suivant la revendication 1 ou la revendication 2, caractérisé en ce que la mesure de la tension du rotor ($U_A$) et de l'intensité (I) du moteur est effectuée peu avant le point de déclenchement du sectionneur d'alimentation (12).

4. Dispositif d'entraînement suivant la revendication 1 ou la revendication 2, caractérisé en ce qu'on calcule des valeurs moyennes de la tension du rotor et de l'intensité moteur, et en ce que le quotient est calculé à partir de cette valeur moyenne.

5. Dispositif d'entraînement suivant l'une des revendications 1 à 4, caractérisé en ce que le signal de commande (S) est modifié par paliers correspondant à des valeurs prédéfinies.

6. Dispositif d'entraînement suivant la revendication 5, caractérisé en ce que des valeurs constantes des paliers sont prédéfinies.

7. Dispositif d'entraînement suivant la revendication 5, caractérisé en ce que les valeurs prédéfinies des paliers sont calculées à partir de la différence entre la valeur réelle du quotient ($Q_2$) et la valeur de référence ($Q_1$) du quotient.

8. Dispositif d'entraînement suivant l'une des revendications 1 à 7, caractérisé en ce qu'un signal de limitation est émis seulement si le signal de commande atteint une grandeur prédéfinie, et/ou si l'intensité moteur est inférieure à une valeur prédéfinie, et/ou si le signal de commande est inférieur à une valeur maximale prédéfinie.

FIG. 1

EP 0 492 070 B1

## FIG. 2

## FIG. 3

## FIG. 4